# EUROPEAN PATENT SPECIFICATION

(11) **EP 3 409 557 B1**
(45) Date of publication and mention of the grant of the patent: **12.05.2021**
(21) Application number: 17382327.9
(22) Date of filing: 01.06.2017
(51) Int. Cl.: B61D 19/02, B61D 29/00

(54) **SEALING STRIP FOR VEHICLE DOORS**
DICHTUNGSSTREIFEN FÜR FAHRZEUGTÜREN
ENSEMBLE D'ÉTANCHÉITÉ POUR DES PARE-BRISE DE VÉHICULES

(43) Date of publication of application: 05.12.2018
(73) Proprietor: JC Disseny Ingenieria i Aplicacions S.L., 43350 Les Borges del Camp (Tarragona) (ES)
(72) Inventor: CARRIÓN ESPELTA, Juan, 43350 LES BORGES DEL CAMP (Tarragona) (ES)
(74) Representative: Herrero & Asociados, S.L.

(56) References cited:
- EP-A1- 1 533 205
- WO-A1-2015/149095
- CN-U- 204 264 155
- DE-A1-102010 019 764
- DE-U1-202004 006 968
- KR-A- 20120 037 185

## Description

The present invention relates to a sealing strip for doors, particularly for public transport, for example, railway vehicle doors.

### Background of the Invention

The leaves of doors for accessing railway vehicles, and generally any door of motorized vehicles intended for transporting people, are equipped on their front edge with a sealing strip usually made from flexible materials, such as EPDM, rubber, neoprene, silicone, etc., and are usually opaque and black in color.

In addition to assuring leak-tightness of the closed door, this strip also protects passengers and/or objects when they are trapped by the leaves of the door during the door closing movement. In order to prevent or minimize getting trapped, an attempt is made to inform the passengers of the state of the doors.

Today there are systems for informing or signal about the state of the door through audible signals and light signals inside and outside the vehicle. Said signals are not always effective; sometimes audible signals cannot be heard due to the surrounding environment, and sometimes since the light signals are not located on the actual leaves, they are not a clear reflection of the identification of the state of said leaves.

To improve this situation, lighting systems based on strips of LEDs placed in the frame of the leaf or in the glasses in the leaves are being assembled today, but this has several drawbacks. On one hand, this information has to be identical on both sides of the leaf, which entails several strips of LEDs, and on the other hand, light diffusers have to be added because direct illumination with LEDs is bothersome for passengers.

WO2015149095 A1 discloses illumination of doors of vehicles, in particular of pivot and slide doors of rail vehicles, having a door frame, having at least one door leaf, and having at least one lighting means in the door region. In order to improve the lighting and to protect the lighting means there is provision that the lighting means is arranged on the door frame at a location which is at least essentially covered by the door leaf in the closed state of the door.

DE102010019764 A1 discloses a luminous protection device for a door of a vehicle. The protection device has a protective strip for attachment to a door edge of the door and a lighting means for signaling a door state of the door. The lighting means extends along the door edge and is connected to the protective strip.

CN204264155 U discloses a rail transit train door with LED indicating light strips.

Therefore, the objective of the present invention is to provide a sealing strip that allows light through when illuminated by an internal source internal, and at the same time acts as a diffuser of said light.

In other words, the objective of the present invention is to use the strip of the door for the luminous signaling of the state of said door. This will mean that passengers will identify the signaling with the object causing it. Furthermore, since the front vertical strip of the leaf lights up, the signaling can be seen both by passengers inside the vehicle and passengers outside the vehicle, as well as by any passenger between the actual leaves of the door.

### Description of the Invention

The sealing strip of the invention solves the aforementioned drawbacks, providing other advantages that will be described below.

The sealing strip for vehicle doors according to the present invention comprises a main body that can be assembled on at least one of the edges of a vehicle door, and is characterized in that it also comprises a light emitting element and in that said main body is made of a translucent or transparent material, allowing the passage of light out from said light emitting element, 2. the light emitted by the light emitting element propagating through the main body.

According to two preferred alternative embodiments, said light emitting element is placed outside said main body or inside said main body.

If desired, said main body can also comprise a covering of translucent or transparent material.

According to a preferred embodiment, said main body is made of transparent silicone and said covering is made of translucent silicone, being co-extruded together.

Preferably, said light emitting element is a light emitting diode (LED), although it could be any type of suitable light emitting element.

The luminous signaling of the state of a door of a public transportation vehicle, such as a train or bus, can be done with the sealing strip according to the present invention, making identification easier for passengers.

Furthermore, since the sealing strip lights up, it can be seen both by passengers inside the vehicle and passengers outside the vehicle, as well as by any passenger between the actual leaves of the door.

### Brief Description of the Drawings

To better understand the preceding description, a set of drawings is attached in which a practical embodiment is schematically depicted by way of nonlimiting example.
Figure 1 is a section view of a sealing strip for vehicle doors of the present invention, according to a first embodiment;
Figure 2 is a section view of a sealing strip for vehicle doors of the present invention, according to a second embodiment;
Figure 3 is a perspective view of a vehicle door equipped with a sealing strip according to the present invention on one of its sides; and
Figure 4 is a perspective view of a vehicle door equipped with a sealing strip according to the present invention on its two sides and in the upper and lower parts thereof.

### Description of a Preferred Embodiment

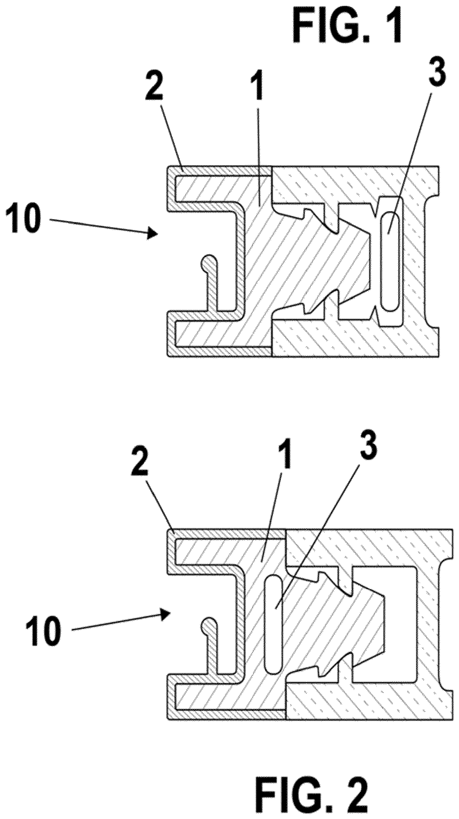

Figures 1 and 2 respectively show first and second embodiments of the sealing strip according to the present invention assembled in a leaf of a vehicle door, particularly, a railway vehicle, but it can also be applied to any type of vehicle (for example a bus, etc.).

According to the depicted embodiments, the sealing strip according to the present invention comprises a main body 1 made of a transparent material, for example transparent silicone.

This main body 1 is covered with a covering 2 that allows light through, for example a translucent material, such as translucent silicone.

The main body 1 and the covering 2 allow the light emitted from a light emitting element 3, for example an LED, which can be located outside the main body 1 (first embodiment of Figure 1) or integrated in the main body 1 (second embodiment of Figure 2), the main body 1 itself acting as a light diffuser.

The main body 1 and the covering 2 are preferably co-extruded together such that the light emitted by the light emitting element 3 propagates through the main body 1 and is diffused by the covering 2.

The lighting can be seen from all the visible angles of the sealing strip (from the front, side, inside, and outside), which does not occur with the signaling known today.

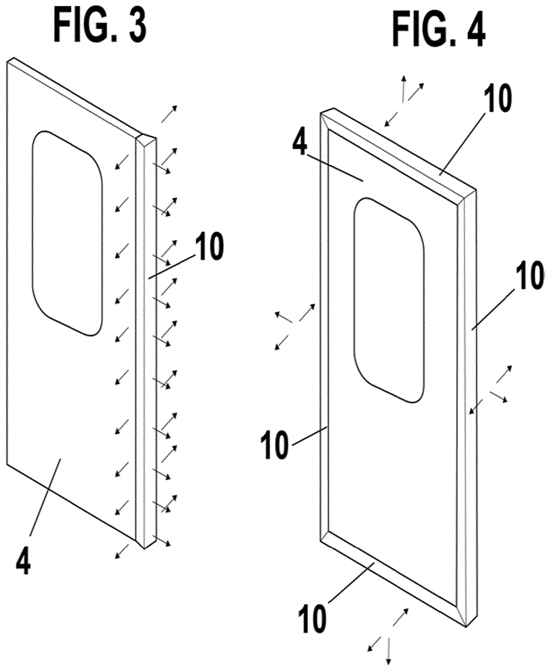

The sealing strip according to the present invention will primarily be assembled in the front vertical parts of the leaves of the door (Figure 3) and shall serve to provide information to travelers through the luminous signaling thereof.

The possibility of illuminating the sealing strip with different colors can provide different information about the state of the actual leaf of the door. For example, a non-illuminated strip may indicate a non-service train, a strip continuously illuminated in green may indicate that the door is enabled for opening, a strip intermittently illuminated in green may indicate that the door is opening, the strip illuminated in red may indicate that the door is closed and disabled for opening, and the strip intermittently illuminated in red may indicate that the door is closing, etc.

This luminous illumination provided through the strip serves so that the passenger can have at all times information about the state of the door, therefore contributing to the safety thereof.

Since the strip is located at the ends of the leaf, it is providing information to passengers located on both sides of the door, i.e., to passengers inside the vehicle and to passengers outside the vehicle, and therefore they all know perfectly well the state of the door at all times, avoiding confusion when trying to get in or out of the vehicle.

It should be indicated that the sealing strip according to the present invention can also be manufactured in its entirety from a translucent material, forming the main body 1, without the presence of the covering, thereby preventing the co-extrusion of two materials.

It should also be indicated that the sealing strip according to the present invention can be assembled along the entire contour the leaf of a door, as shown in Figure 4, to provide other information, and can be made in any suitable color.

Despite having made reference to a specific embodiment of the invention, it is obvious for a person skilled in the art that the described sealing strip is susceptible to a number of variations and modifications, and that all the mentioned details can be replaced with other technically equivalent details without departing from the scope of protection defined by the attached claims.

## Claims

1. Sealing strip for vehicle doors, comprising a main body (1) that can be assembled on at least one of the edges of a vehicle door (4), **characterized in that** it also comprises a light emitting element (3), and **in that** said main body (1) is made of a translucent or transparent material, allowing the passage of said light out from said light emitting element (3), the light emitted by the light emitting element (3) propagating through the main body (1).

2. Sealing strip for vehicle doors according to claim 1, wherein said light emitting element (3) is placed outside said main body (1).

3. Sealing strip for vehicle doors according to claim 1, wherein said light emitting element (3) is placed inside said main body (1).

4. Sealing strip for vehicle doors according to claim 1, wherein said main body (1) comprises a covering (2) of translucent or transparent material.

5. Sealing strip for vehicle doors according to claim 1, wherein said main body (1) is made of transparent silicone.

6. Sealing strip for vehicle doors according to claim 4, wherein said covering (2) is made of translucent silicone.

7. Sealing strip for vehicle doors according to any one of claims 1 to 3, wherein said light emitting element (3) is a light emitting diode (LED).

## Patentansprüche

1. Dichtungsstreifen für Fahrzeugtüren, umfassend einen Hauptkörper (1), der an mindestens einer der Kanten einer Fahrzeugtür (4) angebracht werden kann, **dadurch gekennzeichnet, dass** er außerdem ein lichtemittierendes Element (3) umfasst, und **dadurch,** dass der Hauptkörper (1) aus einem durchscheinenden oder transparenten Material besteht, welches den Durchgang von Licht von dem lichtemittierenden Element (3) nach außen zulässt, wobei sich das von dem lichtemittierenden Element (3) emittierte Licht durch den Hauptkörper (1) ausbreitet.

2. Dichtungsstreifen für Fahrzeugtüren nach Anspruch 1, wobei das lichtemittierende Element (3) außerhalb des Hauptkörpers (1) platziert ist.

3. Dichtungsstreifen für Fahrzeugtüren nach Anspruch 1, wobei das lichtemittierende Element (3) innerhalb des Hauptkörpers (1) platziert ist.

4. Dichtungsstreifen für Fahrzeugtüren nach Anspruch 1, wobei der Hauptkörper (1) eine Abdeckung (2) aus lichtdurchlässigem oder transparentem Material umfasst.

5. Dichtungsstreifen für Fahrzeugtüren nach Anspruch 1, wobei der Hauptkörper (1) aus transparentem Silikon besteht.

6. Dichtungsstreifen für Fahrzeugtüren nach Anspruch 1, wobei die Abdeckung (2) aus lichtdurchlässigem Silikon besteht.

7. Dichtungsstreifen für Fahrzeugtüren nach einem der Ansprüche 1 bis 3, wobei das lichtemittierende Element (3) eine lichtemittierende Diode (LED) ist.

## Revendications

1. Bande d'étanchéité pour portières de véhicule, comprenant un corps principal (1) qui peut être assemblé sur au moins un des bords d'une portière de véhicule (4), **caractérisée en ce qu'**elle comprend également un élément électroluminescent (3), et **en ce que** ledit corps principal (1) est composé d'un matériau translucide ou transparent, permettant le passage de ladite lumière hors dudit élément électroluminescent (3), la lumière émise par l'élément électroluminescent (3) se propageant à travers le corps principal (1).

2. Bande d'étanchéité pour portières de véhicule selon la revendication 1, dans laquelle ledit élément électroluminescent (3) est placé à l'extérieur dudit corps principal (1).

3. Bande d'étanchéité pour portières de véhicule selon la revendication 1, dans laquelle ledit élément électroluminescent (3) est placé à l'intérieur dudit corps principal (1).

4. Bande d'étanchéité pour portières de véhicule selon la revendication 1, dans laquelle ledit corps principal (1) comprend un revêtement (2) de matériau translucide ou transparent.

5. Bande d'étanchéité pour portières de véhicule selon la revendication 1, dans laquelle ledit corps principal (1) est composé de silicone transparent.

6. Bande d'étanchéité pour portières de véhicule selon la revendication 4, dans laquelle ledit revêtement (2) est composé de silicone translucide.

7. Bande d'étanchéité pour portières de véhicule selon l'une quelconque des revendications 1 à 3, dans laquelle ledit élément électroluminescent (3) est une diode électroluminescente (DEL).
